# EUROPÄISCHE PATENTSCHRIFT

(11) **EP 0 609 720 B1**
(45) Veröffentlichungstag und Bekanntmachung des Hinweises auf die Patenterteilung: **01.10.1997**
(21) Anmeldenummer: 94100853.4
(22) Anmeldetag: 21.01.1994
(51) Int. Cl.: F16K 31/60

(54) **Ventil mit Stellhebelanschlag**
Valve with working lever stop
Soupape avec arrêt du levier de commande

(30) Priorität: 04.02.1993 DE 4303191
(43) Veröffentlichungstag der Anmeldung: 10.08.1994
(73) Patentinhaber: FRIEDRICH GROHE AKTIENGESELLSCHAFT, D-58675 Hemer (DE)
(72) Erfinder: Hirsch, Heinz, D-59494 Soest (DE); Faust, Günter, D-58730 Fröndenberg (DE)

(56) Entgegenhaltungen:
- EP-A- 0 426 639
- EP-A- 0 568 013
- DE-A- 3 211 619
- DE-A- 3 244 121
- DE-A- 3 426 480
- GB-A- 2 110 340

## Beschreibung

Die Erfindung betrifft ein Ventil mit den im Oberbegriff des Anspruchs 1 angegebenen Merkmalen. Ein derartiges Ventil ist aus der Druckschrift GB-A-2 110 240 bekannt. Hierbei ist eine Anschlaghülse, die stirnseitig angeordnete Anschlagstufen aufweist, auf einem verzahnten Teil eines Stellhebels angeordnet.
In der nicht vorveröffentlichten Druckschrift EP-A-0 568 013 ist außerdem ein Ventil gezeigt, bei dem eine auf einem Stellhebel angeordnete Buchse vorgesehen ist, an der an der einen Stirnseite mehrere Vorsprünge zur Schwenkbegrenzung ausgebildet sind.
Schließlich ist aus der deutschen Offenlegungsschrift DE-A 32 44 121 ein Ventil bekannt, bei dem in dem Stellhebel in einer quer angeordneten Gewindebohrung ein Gewindestift vorgesehen ist. Der Gewindestift kann radial aus dem Stellhebel herausgedreht werden, so daß die vorstehende Stirnfläche des Gewindestiftes mit der an dem Ventilgehäuse ausgebildeten Anschlagfläche zusammenwirkt. Durch ein entsprechendes Herausdrehen des Gewindestiftes kann somit die maximale Öffnung des Ventils und damit die maximal mögliche Durchflußmenge verringert werden.
Diese vorveröffentlichten Durchflußbegrenzungsausbildungen lassen sich jedoch nicht oder nur sehr schwer bei bereits installierten Ventilen einsetzen.

Der Erfindung liegt die Aufgabe zugrunde, bei einem Ventil nach dem Oberbegriff des Anspruchs 1 eine Durchflußbegrenzungseinrichtung zu schaffen, die auch nachträglich an dem Ventil einsetzbar ist und die kostengünstig hergestellt werden kann.

Diese Aufgabe wird erfindungsgemäß mit den Merkmalen des Anspruchs 1 gelöst.
Weitere Ausgestaltungen der Erfindung sind in den Ansprüchen 2 bis 4 angegeben.

Mit diesen Maßnahmen kann auch nachträglich der Schwenkbereich des Stellhebels mit einfachen Mitteln begrenzt werden.

Ein Ausführungsbeispiel der Erfindung ist in der Zeichnung dargestellt und wird im folgenden näher beschrieben. Es zeigt
- Figur 1: eine Armatur für einen Waschtisch mit einem Ventil zur Wassermischung und -dosierung mit Eingriffbedienung teilweise geschnitten;
- Figur 2: einen Teil der in Figur 1 gezeigten Griffausbildung in vergrößerter Darstellung im Längsschnitt;
- Figur 3: ein Keilelement in Vorderansicht in vergrößerter Darstellung;
- Figur 4: das in Figur 3 gezeigte Keilelement in Seitenansicht;
- Figur 5: das in Figur 3 gezeigte Keilelement in Draufsicht;
- Figur 6: das in Figur 3 gezeigte Keilelement in der Schnittebene VI.

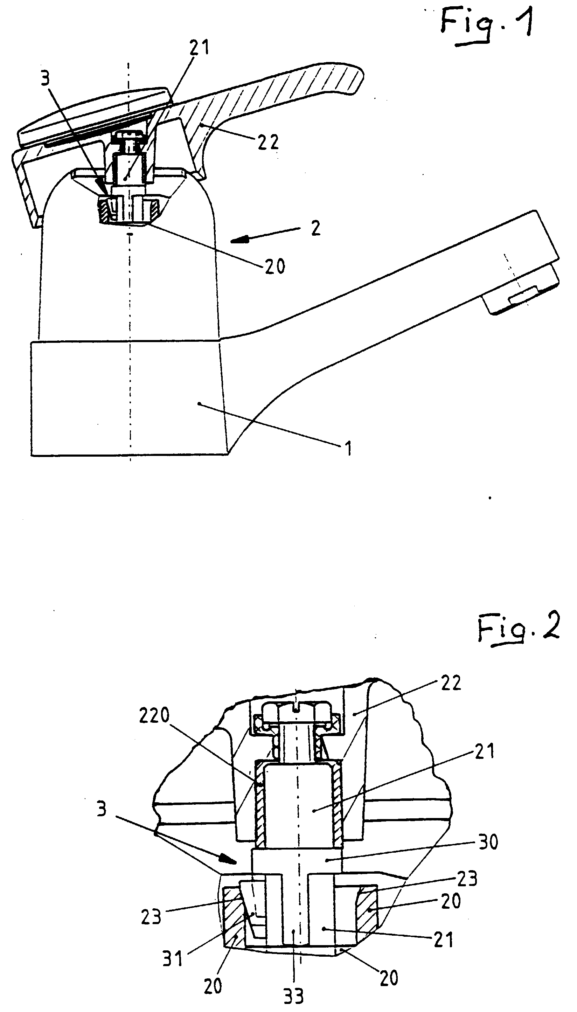

In Figur 1 ist eine zum Teil dargestellte Armatur 1 für die Anordnung auf einem Waschtisch etc. gezeigt. Durch in der Zeichnung nicht dargestellte Anschlußrohre wird der Armatur 1 Kaltwasser und Warmwasser vom Versorgungsleitungsnetz zugeführt. In der Armatur 1 ist ein Ventil 2 vorgesehen, dessen einzelne Ventilelemente in einem Ventilgehäuse 20 gekapselt angeordnet sind. Aus dem Ventilgehäuse 20 ist axial ein aus Vierkantmaterial hergestellter Stellhebel 21 herausgeführt, an dem unter Zwischenlage einer Isolierbuchse 220 ein Griff 22 befestigt ist. Der Griff 22 ist in zwei Freiheitsgraden bewegbar. Mit einem Drehen des Griffs 22 um die vertikale Achse kann das Mischungsverhältnis des zufließenden Kalt- und Warmwassers, mit einem Schwenken um die horizontale Achse die Wasserdurchflußmenge des Ventils 2 eingestellt werden. Zur Begrenzung der Schwenkbewegung um die horizontale Achse sind Festanschläge 23 an dem Ventilgehäuse 20 ausgebildet, an denen der Stellhebel 21 in der maximalen Öffnungsposition oder der Schließposition des Ventils 2 anliegt, wie es insbesondere aus Figur 2 der Zeichnung zu entnehmen ist.

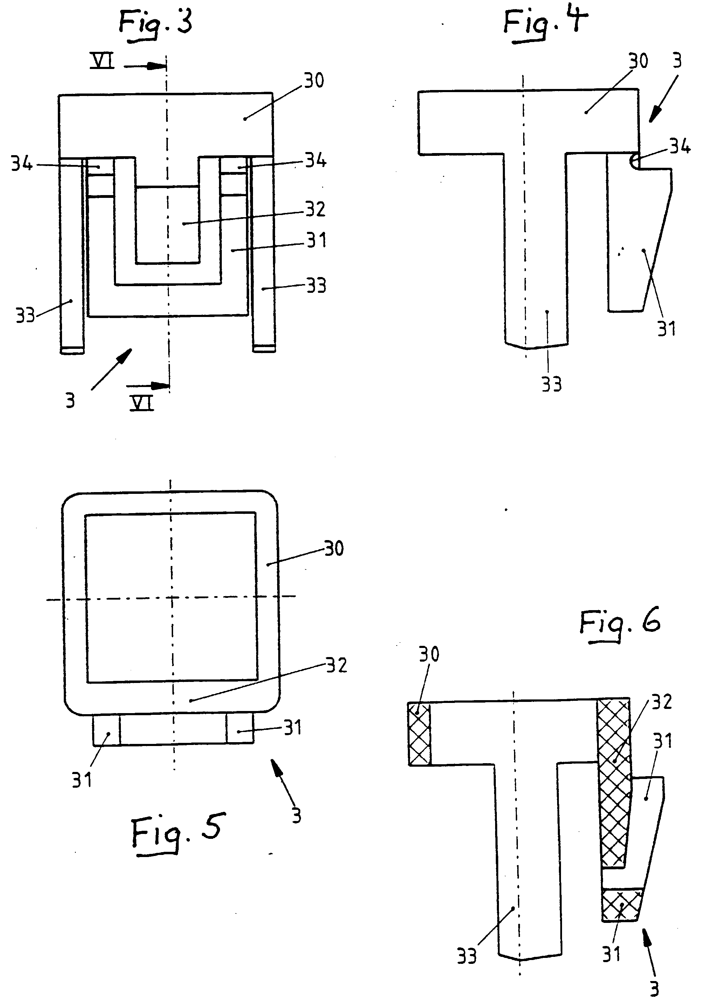

Zur wahlweisen Begrenzung der Maximalöffnung des Ventils 2 bzw. Begrenzung der maximalen Durchflußmenge kann zwischen dem Stellhebel 21 und dem Festanschlag 23 ein Keilelement 3 angeordnet werden. Das Keilelement 3 ist an einer Hülse 30 angeformt, welche den Stellhebel 21 umfaßt. Die Hülse 30 mit dem Keilelement 3 ist axial einerseits mit Seitenwangen 33 im Bereich der horizontalen Schwenkachse am Gehäuse 20 abgestützt und wird andererseits von dem Griff 22 mit der Isolierbuchse 220 in der Stecklage gesichert.
Das Keilelement 3 ist, wie es insbesondere aus den Figuren 3 bis 6 ersichtlich ist, einstückig mit der Hülse 30 und den Seitenwangen 33 ausgebildet und aus Kunststoff im Spritzgießverfahren hergestellt. Das Keilelement 3 besteht dabei aus einem höheren Keil 31, der als U-förmiger Bügel um einen flacheren Keil (32) herumgeführt ist, wie es insbesondere aus Figur 3 und 6 zu entnehmen ist. Der U-förmige Bügel des höheren Keils 31 ist hierbei im Bereich des Übergangs zur Hülse 30 mit als Hohlkehlen ausgebildeten Sollbruchstellen 34 versehen, so daß der höhere Bügel 31 wahlweise abgebrochen werden kann.

Die Montage des Keilelements kann in folgender Weise vorgenommen werden:
Bei einer bereits installierten Armatur 1 wird zunächst der Griff 22 mit der Isolierbuchse 220 von dem Stellhebel 21 des Ventils 2 abgenommen. Nunmehr kann das Keilelement 3 mit der Hülse 30 über den Stellhebel 21 gestreift werden, bis die Seitenwangen 33 an dem Ventilgehäuse 20 zur Anlage gelangen. Sodann kann erneut der Griff 22 mit der Isolierbuchse 220 an dem Stellhebel 21 befestigt werden. Hiernach ist die maximale Durchflußbegrenzung wirksam bzw. das Keilelement 3 verhindert mit dem Keil 31 die ursprünglich mögliche maximale Öffnung des Ventils 2. Sollte der Keil 31 eine zu starke Drosselung des Durchflusses bewirken, so kann nach einem nochmaligen Herausnehmen des Keilelements 3 der Keil 31 an den Sollbruchstellen 34 abgebrochen werden und danach das Keilelement 3 erneut eingebaut werden, so daß in dieser Version die Durchflußdrosselung verringert bzw. die maximale Durchflußmenge vergrößert wird.
Somit können drei verschiedene Maximaldurchflußpositionen des Stellhebels 21 bestimmt werden, nämlich, mit dem Keil 31 wird eine relativ starke Drosselung, mit dem Keil 32 eine geringere Drosselung und ohne Keilelement 3 überhaupt keine Drosselung vorgenommen.
Das Keilelement 3 kann selbstverständlich neben dem nachträglichen Einbau in bereits installierten Armaturen auch werksseitig bei der Fertigmontage der Armatur 1 mit einmontiert werden.

Bei dem vorstehend aufgeführten Keilelement 3 ist die Hülse 30 ungeschlitzt ausgebildet, so daß es nur axial auf den Stellhebel 21 aufgeschoben werden kann. Selbstverständlich kann aber auch die Hülse an der vom Keilelement 3 abgekehrten Stirnseite geschlitzt ausgebildet werden, so daß sie auch seitlich auf den Stellhebel 21 aufgeschnappt werden kann.

## Patentansprüche

1. Ventil mit einem Ventilgehäuse (20), aus dem ein um eine horizontale Achse verschwenkbarer Stellhebel (21) zur Bestimmung wenigstens der Durchflußmenge herausgeführt ist, wobei zur wahlweisen Begrenzung der maximalen Durchflußmenge pro Zeiteinheit eine besondere Anschlagausbildung vorgesehen ist, die eine Anschlaghülse (30) aufweist, die auf den Stellhebel (21) aufschiebbar und in der Stecklage fixierbar ist und mit einem Festanschlag (23) des Ventilgehäuses (20) korrespondiert, und in der einen Richtung axial von einem auf den Stellhebel (21) angeordneten Griff (22) gehalten ist, dadurch gekennzeichnet, daß die Hülse (30) ein Keilelement (3) trägt und mit wenigstens einer Seitenwange (33) versehen ist, die die Hülse (30) in der anderen Richtung axial im Bereich der horizontalen Achse am Ventilgehäuse (20) abstützt, wobei das Keilelement (3) mit der einen Keilfläche an dem Stellhebel (21) anliegt, während die andere Keilfläche mit dem an einer Innenseite des Ventilgehäuses (20) ausgebildeten Festanschlag (23) zusammenwirkt.

2. Ventil nach Anspruch 1, dadurch gekennzeichnet, daß die Hülse (30) an der dem Keilelement (3) gegenüberliegenden Seite geschlitzt ausgebildet ist, so daß sie mit dem Keilelement (3) radial auf den Stellhebel (21) aufgeschnappt werden kann.

3. Ventil nach Anspruch 1 oder 2, dadurch gekennzeichnet, daß das Keilelement (3) zwei unterschiedlich hohe Keile (31,32) aufweist, derart, daß der höhere Keil (31) als U-förmiger Bügel den flacheren Keil (32) umfaßt, wobei der U-förmige, höhere Keil (31) über Sollbruchstellen (34) abgebrochen werden kann, so daß wahlweise einer der beiden Keile (31,32) als Durchflußbegrenzer zur Wirkung gelangt.

4. Ventil nach einem der Ansprüche 1 bis 3, dadurch gekennzeichnet, daß das Keilelement (3) oder die Hülse (30) mit dem Keilelement (3) einstückig aus Kunststoff im Spritzgießverfahren hergestellt ist.

## Claims

1. Valve having a valve housing (20), from which there extends an adjusting lever (21), which can be swivelled around a horizontal axis, for the determination of at least the flow, there being provided for limiting, as desired, the maximum flow per unit of time a special stop arrangement comprising a stop sleeve (30), which can be pushed over the adjusting lever (21) and can be fixed in the mounted position and corresponds with a fixed stop (23) of the valve housing (20) and is retained in one direction axially by a handle (22) arranged on the adjusting lever (21), characterised in that the sleeve (30) bears a wedge element (3) and is provided with at least one lateral limb (33), which supports the sleeve (30) on the valve housing (20) in the other direction axially in the region of the horizontal axis, the wedge element (3) abutting the adjusting lever (21) with one wedge surface, while the other wedge surface works together with the fixed stop (23) formed on an internal face of the valve housing (20).

2. Valve according to claim 1, characterised in that the sleeve (30) is of slit construction on the side remote from the wedge element (3), so that the sleeve (30), together with the wedge element (3), can be snapped radially onto the adjusting lever (21).

3. Valve according to claim 1 or claim 2, characterised in that the wedge element (3) is provided with two wedges (31, 32) of differing height in such a manner that the higher wedge (31), in the form of a U-shaped hoop, surrounds the flatter wedge (32), it being possible to break off the U-shaped, higher wedge (31) by means of predetermined breaking points (34), so that one of the two wedges (31, 32), as desired, comes into effect as flow limiter.

4. Valve according to any one of claims 1 to 3, characterised in that the wedge element (3) or the sleeve (30) in one piece with the wedge element (3) is produced from plastics by injection moulding.

## Revendications

1. Soupape comportant un boîtier (20) d'où part, pivotant autour d'un axe horizontal, un levier de réglage (21) servant à définir au moins le débit, tandis que, pour limiter à volonté le débit maximal par unité de temps, il est prévu un système spécifique de boîtier comprenant une douille de butée (30) pouvant coulisser sur le levier de réglage et être bloquée en position enfoncée, cette douille correspondant à une butée fixe 23 du boîtier de soupape (20) et étant maintenue, dans un sens de la direction axiale, par une poignée (22) montée sur le levier de réglage (21),
caractérisée en ce que
la douille (30) porte un élément en coin (3) et possède au moins une joue latérale (33) par laquelle elle s'appuie, dans l'autre sens de la direction axiale, sur le boîtier de soupape (20) au niveau de l'axe horizontal, l'élément en coin (3) étant en contact, par une des faces du coin, avec le levier de réglage (21), tandis que l'autre face du coin coopère avec une butée fixe (23) prévue sur la face interne du boîtier de soupape (20).

2. Soupape selon la revendication 1,
caractérisée en ce que
la douille (30) est fendue du côté opposé à l'élément en coin (3) de sorte qu'elle peut, avec l'élément en coin (3), être encliquetée sur le levier de réglage.

3. Soupape selon la revendication 1 ou 2,
caractérisée en ce que
l'élément en coin (3) comporte deux coins (31, 32) de hauteurs inégales, le coin le plus en saillie (31) ayant la forme d'un étrier en U entourant le coin le plus plat (32), et pouvant être séparés au niveau de zones de fracture imposées (34), ce qui permet de choisir l'un des deux coins (31, 32) comme limiteur de débit.

4. Soupape selon une des revendications 1 à 3,
caractérisée en ce qu'
on peut mouler en une seule pièce de matière plastique, par injection, l'élément en coin (3) ou la douille (30) avec l'élément en coin (3).
